(19) Europäisches Patentamt

European Patent Office

Office européen des brevets

(11) Veröffentlichungsnummer: **0 220 474 B1**

(12) **EUROPÄISCHE PATENTSCHRIFT**

(45) Veröffentlichungstag der Patentschrift: **16.06.93**

(21) Anmeldenummer: **86112898.1**

(22) Anmeldetag: **18.09.86**

(51) Int. Cl.⁵: **G06F 15/16**

(54) **Wellenfrontfeldrechner.**

(30) Priorität: **21.09.85 DE 3533800**

(43) Veröffentlichungstag der Anmeldung:
**06.05.87 Patentblatt 87/19**

(45) Bekanntmachung des Hinweises auf die
Patenterteilung:
**16.06.93 Patentblatt 93/24**

(84) Benannte Vertragsstaaten:
**FR GB NL SE**

(56) Entgegenhaltungen:
**BE-A- 651 394**
**FR-A- 2 388 341**

**THE 8th ANNUAL SYMPOSIUM ON COMPUTER ARCHITECTURE, Minneapolis, 12.-14. Mai 1981, Seiten 197-215, IEEE, New York, US; B. ACKLAND et al.: "An integrated multiprocessing array for time warp pattern matching"**

**COMMUNICATIONS OF THE ACM, Band 28, Nr. 8, August 1985, Seiten 840-853, ACM; D.P. O'LEARY et al.: "Data-flow algorithms for pa-rallel matrix computations"**

**INTEGRATION, THE VLSI JOURNAL, Band 4, Nr. 1, März 1986, Seiten 65-74, Elsevier**

**Science Publishers B.V., Amsterdam, NL; H.-W. LANG: "The instruction systolic array - a parallel architecture for VLSI"**

(73) Patentinhaber: **Lang, Hans-Werner**
**Hansa-Strasse 48**
**W-2300 Kiel(DE)**

(72) Erfinder: **Lang, Hans-Werner**
**Hansa-Strasse 48**
**W-2300 Kiel(DE)**

(74) Vertreter: **Tönnies, Jan G., Dipl.-Ing.**
**Niemannsweg 133**
**W-2300 Kiel 1 (DE)**

**Beschreibung**

Die Erfindung betrifft ein Verfahren zum Betreiben eines hochintegrierten Wellenfront-Feldrechners mit den Merkmalen des Oberbegriffs des Anspruchs 1 sowie einen Wellenfront-Feldrechner mit den Merkmalen des Oberbegriffs des Anspruchs 2.

Aus THE 8th ANNUAL SYMPOSIUM ON COMPUTER ARCHITECTURE, Minneapolis, 12.-14. Mai 1981, Seiten 197-215, IEEE, New York, US; B. ACKLAND et al.: "An integrated multiprocessing array for time warp pattern matching" sind ein Verfahren bzw. ein Wellenfront-Feldrechner der gattungsgemäßen Art bekannt. Dabei ist es jedoch nicht möglich, die Ausführung gewisser Befehle temporär auf einen Teil der Prozessoren im Prozessorfeld zu beschränken.

Aus der BE-A-651 394 war es weiter bekannt, bei einem Wellenfront-Feldrechner mit ersten und zweiten Selektionsbits zu arbeiten. Dieser Vorschlag ermöglicht es jedoch nicht, zu jedem Zeitpunkt eine beliebige Kombination von Prozessoren zu selektieren.

Der Erfindung liegt damit die Aufgabe zugrunde, das Verfahren bzw. den Wellenfront-Feldrechner in der eingangs genannten Art derart auszubilden, daß zu jedem Zeitpunkt eine beliebige Kombination von Prozessoren selektiert werden kann.

Erfindungsgemäß wird diese Aufgabe durch die im kennzeichnenden Teil des Anspruchs 1 bzw. des Anspruch 2 gelöst.

Ein Ausführungsbeispiel der Erfindung wird anhand von Zeichnungen erläutert. Dabei zeigt:

Fig. 1 eine die Grundarchitektur des Rechners und die Kommunikation der einzelnen Prozessoren verdeutlichende schematische Darstellung,

Fig. 2 eine die Übermittlung der von den Prozessoren auszuführenden Befehle verdeutlichende Darstellung,

Fig. 3 eine die wellenfrontartige diagonale Schiebung der Befehle verdeutlichende Darstellung,

Fig. 4 eine die Selektion der jeweils zu aktivierenden Prozessoren verdeutlichende Darstellung,

Fig. 5 eine Fig. 3 entsprechende, die Selektion einzelner Prozessoren verdeutlichende Darstellung,

Fig. 6 ein Prinzipschaltbild eines erfindungsgemäß aufgebauten Rechners unter Darstellung der Steuerleitungen.

Fig. 7 eine Darstellung der Funktionsweise der V-Register,

Fig. 8 eine Darstellung zu vertauschender Matrizen

Fig. 9 eine schematische Darstellung eines Programms für einen erfindungsgemäß aufgebauten Rechner,

Fig. 10 eine Figur 9 entsprechende, vereinfachte Darstellung,

Fig. 11 eine schematische Darstellung eines Programms zur Vertauschung von Teilmatrizen,

Fig. 12 eine Darstellung einzelner Programmschritte, und

Fig. 13 eine schematische Darstellung eines Programms für die Transposition einer 8 x 8 Matrix.

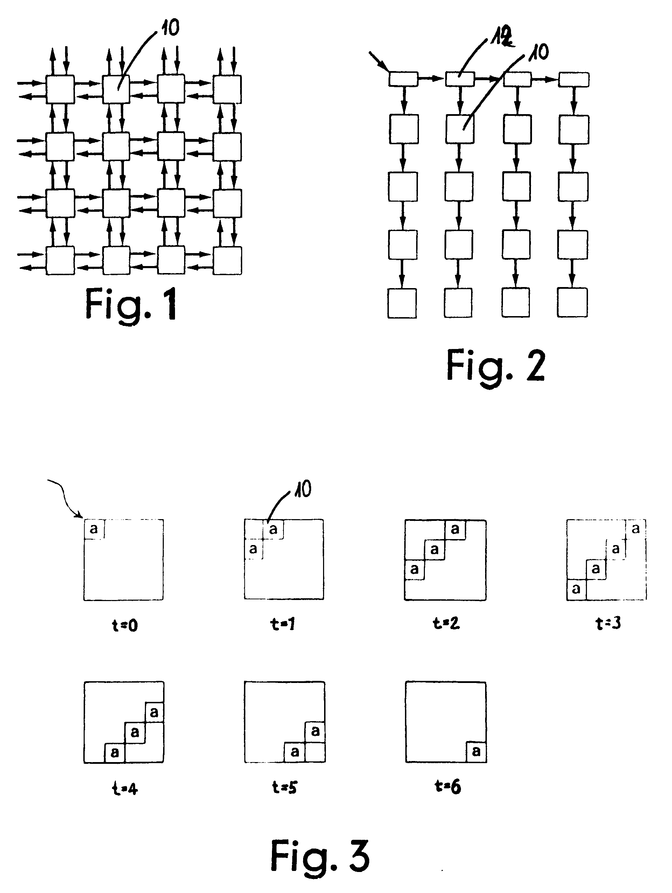

Figur 1 verdeutlicht die Grundarchitektur des aus n Zeilen und m Spalten von Prozessoren 10 bestehenden Parallelrechners. Jeder dieser Prozessoren 10 kann einen Befehl aus einem Befehlsvorrat I ausführen, wobei die zur Ausführung jedes der Befehle benötigte Zeitdauer gleich lang ist.

Jeder Prozessor 10 hat mehrere Datenregister einschließlich eines speziellen Kommunikationsregisters, das zum Austausch von Daten zwischen den Prozessoren dient. Dabei kann jeder Prozessor 10 die Kommunikationsregister seiner vier unmittelbaren Nachbarn lesen, jedoch nur in sein eigenes Kommunikationsregister einschreiben.

Die in Figur 1 gezeigten Pfeile deuten an, daß jeder Prozessor 10 mit seinen vier Nachbarn kommuniziert. Die offenen Anschlüsse an den Rändern des Feldes verdeutlichen die Ein- und Ausgabe von Daten.

In Figure 2 wird die Weitergabe der Befehle von einem Prozessor zu dem nächsten Prozessor 10 verdeutlicht: Besondere außerhalb des Feldes angeordnete Randprozessoren (12) geben die Befehle jeweils nach rechts und in die erste Reihe der Prozessoren 10 weiter. Die Prozessoren 10 des eigentlichen Prozessorfeldes geben die Befehle nur an ihren Nachbarn in der nächsten Zeile weiter. Ein Befehl, der in den Randprozessor der ersten Spalte eingegeben wird, wird also in den Prozessor 10 in der ersten Zeile und der ersten Spalte und in den Randprozessor der zweiten Spalte übergeben, der den Befehl bei dem folgenden Takt dem zweiten Prozessor 10 der ersten Zeile übergibt. Figur 3 verdeutlicht die so bewirkte wellenfrontartige diagonale Schiebung der Befehle durch das Prozessorfeld: der p-te Befehl eines Programms erreicht zum Zeitpunkt p den Prozessor 10 der ersten Spalte und der ersten Zeile (1, 1), zum Zeitpunkt p + 1 die Prozessoren (1, 2) und (2, 1), allgemein also zum Zeitpunkt p + t (t ≤ 2n - 2) die Prozessoren (i, j) mit i + j = t + 2. Bei aufeinanderfolgendem Eingeben unterschiedlicher Befehlscodes auf das Eckelement werden somit den einzelnen Prozessoren 10 des Prozessorfeldes unterschiedliche Befehle eingegeben, wobei Prozessoren 10 einer Diagonale einen übereinstimmenden Befehl erhalten.

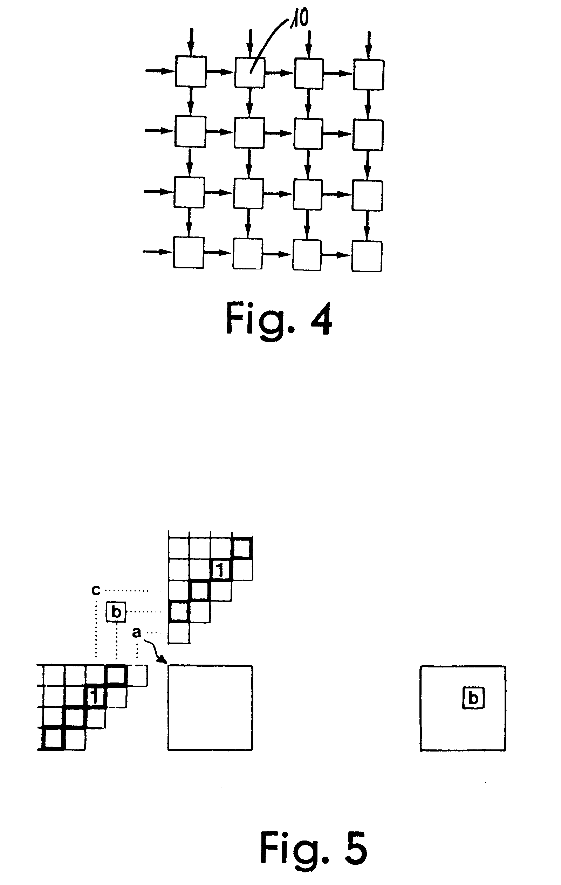

Figur 4 verdeutlicht schematisch die Übergabe der die Aktivierung bestimmter der Prozessoren 10 bewirkenden Selektionsbits, die von außen in Form von Zeilenselektionsbits den Prozessoren 10 der ersten Spalte und in Form von Spaltenselektionsbits den Prozessoren 10 der ersten Zeile aufgegeben werden. Diese übergeben die Befehlsselektionsbits taktweise den ihnen in der jeweiligen Spalte bzw. Zeile nachfolgenden Prozessoren. Neben dem diagonal fließenden Strom von Befehlen tritt also ein horizontaler Strom von Zeilenauswahlbits und ein vertikaler Strom von Spaltenauswahlbits. Jeder Prozessor 10 führt den in seinem Befehlsregister befindlichen Befehl nur dann aus, wenn sowohl das entsprechende Zeilenauswahlbit als auch das entsprechende Spaltenauswahlbit gleich "1" ist. Ist wenigstens eines der beiden Auswahlbits "0", so führt der Prozessor 10 einen "no-operation"-Befehl aus, der alle Registerinhalte unverändert läßt.

Durch eine geeignete Belegung der zu einem Befehl führenden n Zeilen- und m Spaltenselektionsbits läßt sich also die Ausführung des in dem Befehlsregister befindlichen Befehls in dem jeweiligen Prozessor 10 auf bestimmbare Prozessoren 10 des Feldes beschränken. In Figur 5 beispielsweise trifft der Befehl "b" auf die stark umrandet eingezeichneten Zeilen- und Spaltenselektionsbits. Da das zweite Zeilenselektionsbit "1" ist, wird der Befehl in der zweiten Zeile des Feldes ausgeführt, hier allerdings nur in der dritten Spalte, da nur das Spaltenselektionsbit 3 gleich "1" ist. Somit wird der Befehl "b" nur in dem markierten Prozessor ausgeführt. Es ist offenkundig, daß mit n Zeilen- und m Spaltenselektionsbits nicht jede beliebige Teilmenge der m x n Prozessoren 10 ausgewählt werden kann. Diese Einschränkung ist jedoch ohne Einfluß auf die Ausführbarkeit der meisten, für die Praxis interessanten Algorithmen.

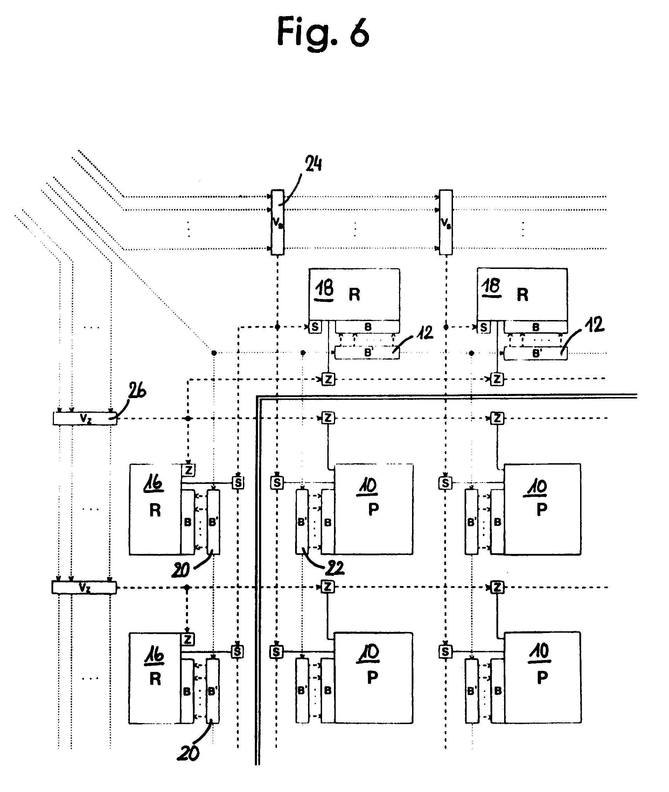

Figur 6 zeigt ein schematisches Schaltbild eines aus lediglich vier Feldprozessoren 10 und vier Randprozessoren 16, 18 bestehenden Parallelrechners (bei einer praktischen Verwirklichung wird die Anzahl der Feldprozessoren natürlich weitaus größer sein, die Anzahl der Randprozessoren entspricht der Anzahl der Spalten bzw. der Zeilen).

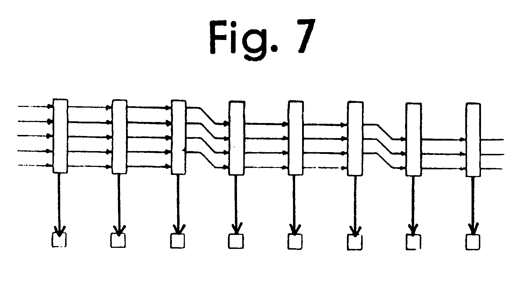

Links von dem mit einer Doppellinie abgegrenzten Prozessorfeldes sind jeweils einer der Zeilen zugeordnete Randprozessoren 16 angeordnet. Entsprechende den Spalten des Prozessorfeldes zugeordnete Randprozessoren 18 sind am oberen Rand vorgesehen. Diese Randprozessoren 16, 18 dienen zur Versorgung des Prozessorfeldes mit Befehlen, Selektionsbits sowie zur Ein-/Ausgabesteuerung. Die Feldprozessoren 10 und die Randprozessoren 16, 18 sind jeweils mit Schieberegistern B', B, S und Z versehen. Die Randprozessoren 16, 18 unterscheiden sich von den Feldprozessoren im wesentlichen dadurch, daß sie anstelle eines Rechenwerks eine Ein-/Ausgabe-Steuerung aufweisen. Die Randprozessoren weisen weiter V-Register 24, 26 mit parallelem Zugriff und einer Bitanzahl n/k bzw. m/k auf, wobei k die Anzahl der Bittakte pro Worttakt ist. Diese V-Register der Randprozessoren dienen zur vorläufigen Aufnahme von Selektionsbits. Die V-Register 24, 26 von benachbarten Randprozessoren sind hintereinander geschaltet, so daß Blöcke von Selektionsbits am Rand des Feldes entlang geschoben werden können, wie dies in Figur 7 verdeutlicht ist. Dabei sind die Ausgänge des jeweils rk-ten V-Registers auf die um eine Stelle niedrigeren Eingänge des rk + 1-ten V-Registers geführt (r = 1,... n/k - 1).

Zur Versorgung eines n x n-Prozessorfeldes mit Befehlen und Selektionsbits werden jedem Wort-Takt 2n + k Bit an Information benötigt (je n Bit für die Zeilen- und Spaltenauswahl, ein k-Bit-Befehlswort). Diese 2n + k Bit werden zweckmäßigerweise in den k Takten, die ein Wort-Takt dauert, seriell in der Breite 2n/k + 1 übertragen. Je n/k Bit werden dabei in jedem Takt parallel in die Register $V_Z$ und $V_S$ geschoben; ein Bit wandert in die B'-Register des Prozessors (1,1) sowie der Randprozessoren (0,1) und (1,0). Die Befehle werden in den Randprozessoren benötigt, um die Ein-/Ausgabe zu steuern.

Zu Beginn des nächstfolgenden Wort-Taktes wird der Befehl in die B-Register übernommen und das unterste Bit aus den V-Registern 24, 26 übernommen. Die untersten Bits der V-Register sind somit "verbraucht", befinden sich aber noch in den V-Registern. Bei dem Weiterschieben der V-Register-Inhalte verschwinden jedoch diese Bits, da sie zwischen den rk-ten und den rk + 1-ten Randprozessoren nicht weitergegeben werden.

Die parallel mit einem Befehl übertragenen Selektionsbits gehören nicht zu diesem Befehl; sie eilen im Verlauf der Berechnung dem Befehl weit voraus. Während der Befehl in jedem Wort-Takt nur um einen Prozessor weitergeschoben wird, werden die Selektionsbits in den V-Registern jeweils um k Prozessoren weitergeschoben.

Ein Zweiphasentakt $\rho_1/\rho_2$ ist der Grundtakt des Systems, wobei die beiden Phasen $\rho_1$ und $\rho_2$ sich nicht überlappen. Die Datenworte der Länge k werden bitseriell ver. arbeitet. Der Takt $\theta$ signalisiert jeweils den Beginn eines neuen Wortes und überlappt mit jedem k-ten $\rho_1$, jedoch nicht mit dem vorangegangenen oder nachfolgenden $\rho_1$.

Die Takte müssen auf dem Clip so verteilt werden, daß diese Eigenschaften zwischen jeweils benachbarten Prozessoren garantiert sind.

Dadurch, daß nur lokale Kommunikation zwischen den Prozessoren stattfindet, ist es nicht erforderlich, daß das gesamte Feld vollsynchron arbeitet, sondern es genügt die lokale Synchronität zwischen benachbarten Prozessoren.

Die in Figur 6 gestrichelt wiedergegebenen Linien bedeuten Leitungen, die durchgeschaltet sind, wenn $\rho_1$ und $\theta$ gleich "1" sind; die gepunkteten Linien bedeuten Leitungen, die durchgeschaltet sind, wenn nur $\rho_1$ = "1" ist. Während $\rho_1$ und $\theta$ = "1" wird somit der im Register B' liegende Befehl in das B-Register des Rechenwerkes übernommen. Ferner werden aus der vorhergehenden Spalte bzw. Zeile des Feldes das Zeilen- bzw. Spaltenauswahlbit übernommen.

Gleichzeitig mit $\rho_1$ und $\theta$ = "1" und in den darauffolgenden k-1 Takten wird der Befehl vom Rechenwerk ausgeführt. Diese Takte werden ausgenutzt, um den Befehl bitseriell in das B'-Register des unteren Nachbarprozessors zu übertragen.

Es ist zu beachten, daß die Funktionen der Randprozessoren auch durch die Prozessoren der ersten Spalte bzw. der ersten Zeile eines Prozessorenfeldes übernommen werden können.

Die optimale Nutzung eines nach der hier vorgeschlagenen Architektur aufgebauten Rechners setzt natürlich besondere Algorithmen voraus.

Als Beispiel für ein Programm für einen wie vorgeschlagen arbeitenden und aufgebauten Rechner soll hier das Programm zum Transponieren einer nxn-Matrix angegeben werden (n = $2^k$).

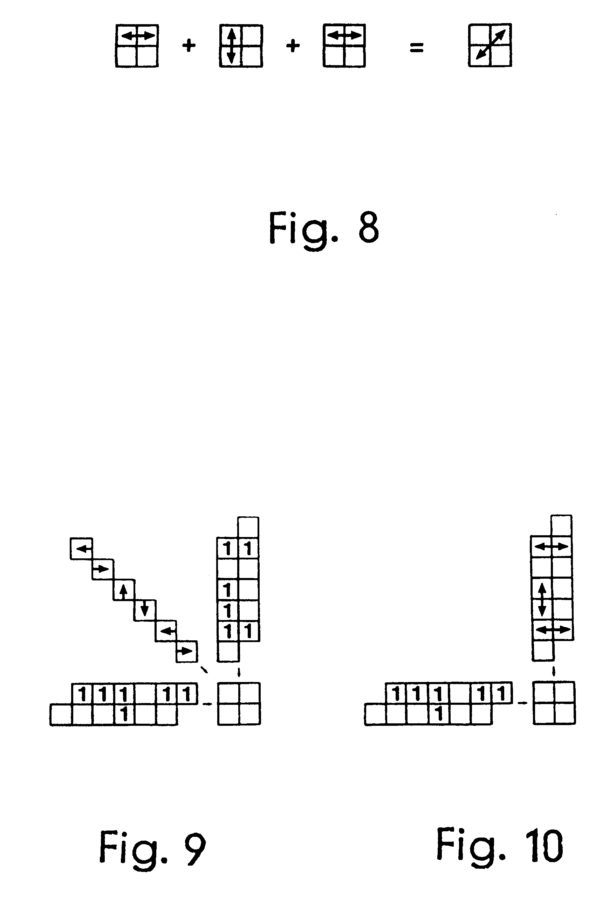

Der zugrundeliegende Algorithmus transponiert iterativ alle $2^j \times 2^j$-Teilmatrizen, j = 1,...,k. Eine $2^j \times 2^j$ (j $\geq$ 1) Matrix wird transponiert, indem ihre vier $2^{j-1} \times 2^{j-1}$-Teilmatrizen transponiert werden und dann die obere rechte mit der unteren linken Teilmatrix vertauscht wird. Dies geschieht durch Vertauschung zunächst der oberen beiden, dann der beiden linken und dann wieder der oberen Teilmatrizen (Figur 8).

Im Falle j = 1 sind diese Teilmatrizen einzelne Elemente, die entsprechend Figur 8 zu vertauschen sind, um eine transponierte 2x2-Matrix zu erhalten.

Figur 9 zeigt das zugehörige Programm für einen Rechner mit 2x2 Prozessoren. Dabei bedeutet ein nach links (rechts, oben, unten) weisender Pfeil das Lesen des Inhalts des Kommunikationsregisters des rechten (linken, unteren, oberen) Nachbarn, und dessen Einschreiben in das Kommunikationsregister. Eine gleichzeitige Ausführung eines "lese links" und "lese rechts" Befehls in nebeneinander liegenden Prozessoren bewirkt eine Vertauschung der Kommunikationsregister-Inhalte; eine gleichzeitige Ausführung der "lese oben" und "lese unten" Befehle eine Vertauschung der Kommunikationsregister-Inhalte in übereinander liegenden Prozessoren.

Bei Ausführung des Programms werden im zweiten, im vierten und im sechsten Programmschritt genau die Vertauschungen von Figur 8 vorgenommen, in all den anderen Schritten geschieht nichts, da in keinem Prozessor Zeilen- und Spaltenauswahlbits mit dem Wert "1" zusammentreffen.

Etwas übersichtlicher erscheint das Programm, wenn man die Einsen im Spaltenauswahlstrom mit den Befehlen gleichsetzt, die sie beim Eintritt in das Prozessorfeld treffen. Dies ist zulässig, da ja von diesem Zeitpunkt an beide parallel nach unten durch das Prozessorfeld geschoben werden und stets zusammenbleiben. Man erhält somit einen senkrecht verlaufenden Befehlsstrom, der sich mit dem waagerechten Zeilenauswahlstrom überschneidet (Figur 10).

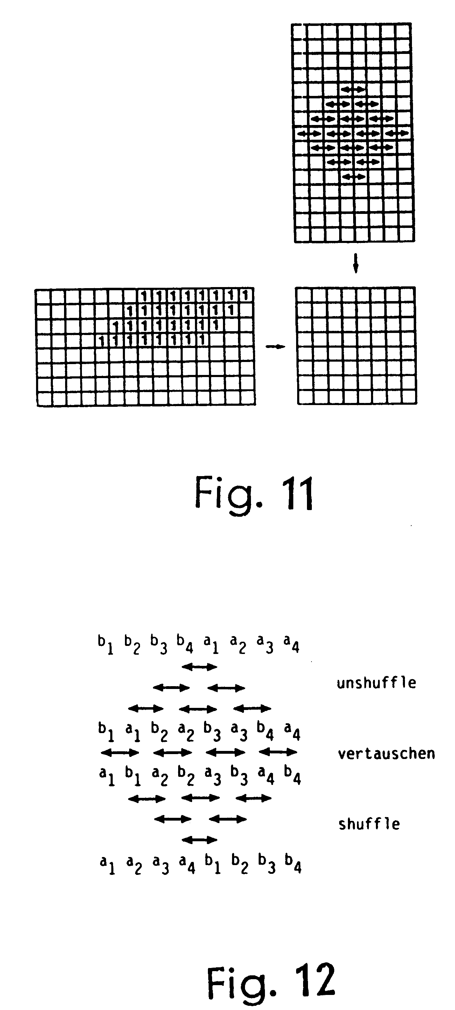

In Fig. 11 ist das Programm zur Vertauschung der beiden oberen 4x4-Teilmatrizen einer 8x8-Matrix angegeben. Das Programm führt in der 1. bis 4. Zeile zunächst ein "perfect shuffle" der Elemente aus (Figur 12), vertauscht dann jeweils benachbarte Elemente und macht anschließend das "perfect shuffle" wieder rückgängig ("unshuffle").

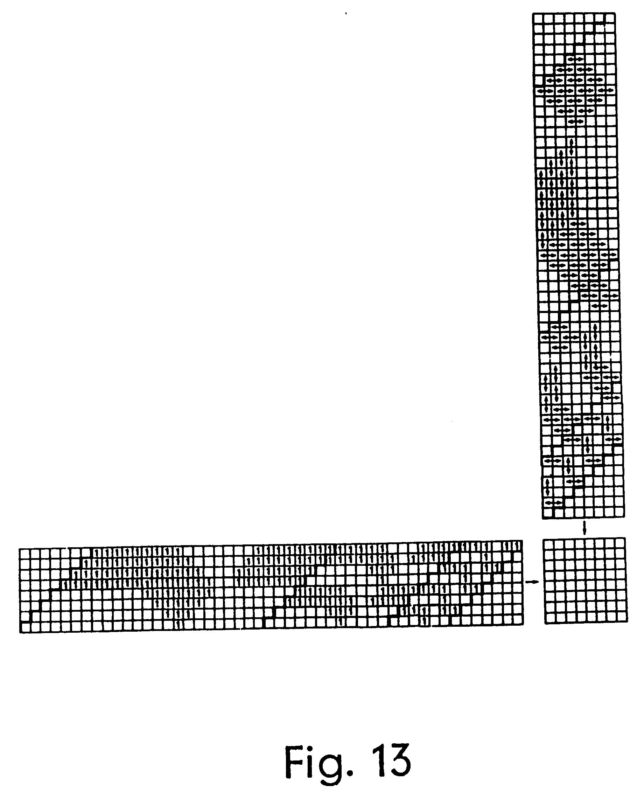

In ähnlicher Weise lassen sich auch übereinanderliegende Teilmatrizen vertauschen. Figur 13 zeigt das vollständige Programm für die Transposition einer 8x8-Matrix. Die drei Iterationsstufen (Transposition aller 2x2-, aller 4x4- und schließlich der 8x8-Matrix) sind durch stark durchgezogene Linien hervorgehoben.

Die vorgeschlagene Rechenarchitektur hat weiter den Vorteil, daß wegen der Identität der einzelnen Feldprozessoren die Ausbeute an funktionsfähigen Chips bei deren Herstellung größer ist, indem einzelne defekte Prozessoren auf dem Chip ausgeschaltet und umgangen werden können. Beispielsweise entsteht so aus einem Prozessorenfeld, in dem Prozessoren defekt sind, durch "Herausstreichen" der entsprechenden Zeilen und/oder Spalten ein intaktes kleineres Feld. Dabei muß natürlich dafür Sorge getragen werden, daß die beiden Nachbarspalten bzw. Nachbarzeilen einer "herausgestrichenen" Spalte bzw. Zeile miteinander verbunden sind. Ein "Herausstreichen" einer Zeile bedeutet dann, daß die Verbindungen der über dieser Zeile befindlichen Prozessoren mit ihren unteren Nachbarn inaktiviert werden und stattdessen die Verbindungen mit den in der übernächsten Zeile darunterliegenden Prozessoren aktiviert werden. Entsprechend müssen die unter der herausgestrichenen Zeile befindlichen Prozessoren nun mit den in der übernächsten Zeile darüberliegenden Prozessoren verbunden werden.

Die Verbindung zwischen den Prozessoren, sowohl die unmittelbaren als auch die zusätzlichen zu den übernächsten Prozessoren, sollten als Metall-Leitungen in der letzten Phase der Fertigungsprozesses ausgeführt werden, aus mehreren Gründen:

1. um die Wahrscheinlichkeit, daß die Verbindungen defekt sind, deutlicher niedriger zu halten als die Wahrscheinlichkeit, daß die Prozessoren defekt sind,

2. um die Signallaufzeiten auf den längeren Verbindungen zu den übernächsten Prozessoren klein zu halten.

3. um das Aktivieren bzw. Inaktivieren von Leitungen hardwaremäßig durch Laser zu ermöglichen.

Ansonsten sind für das Aktivieren und Inaktivieren besondere Steuerleitungen erforderlich.

Die vorgeschlagene Rechnerarchitektur ermöglicht es, bei Anwendung der VSLI-Technik einen Parallelrechner mit einer sehr großen Anzahl von Prozessoren zu schaffen. Ausgehend von einer Taktfrequenz von 10 MHz und einer Datenwortlänge von 64 Bit ergibt sich eine Verarbeitungsgeschwindigkeit von ca. 150 000 Operationen pro Sekunde pro Prozessor. Ein Rechner mit 1000x1000 Prozessoren hätte somit eine Verarbeitungsleistung von 150 Milliarden Operationen pro Sekunde. Damit ergibt sich beispielsweise für das Sortieren von 1 Million 64-Bit-Daten (nach einem ebenfalls bereits existierenden, die vorgeschalgene Architektur zugrundelegenden Sortieralgorithmus) ein Zeitbedarf von weniger als einer Zehntelsekunde.

## Patentansprüche

1. Verfahren zum Betreiben eines hochintegrierten, aus n x m von in n Zeilen und m Spalten angeordneten Prozessoren bestehenden Wellenfront-Feldrechners, bei dem die Befehlscodes so durch das Prozessorfeld geschoben werden, daß jeweils die auf einer Diagonale im Prozessorfeld liegenden Prozessoren gleichzeitig denselben Befehl bearbeiten, dadurch gekennzeichnet, daß n Zeilenselektionsbits horizontal und m Spaltenselektionsbits vertikal durch diesen Wellenfrontrechner geschoben werden und daß jeder Prozessor (10) den in seinem Befehlsregister befindlichen Befehl nur dann ausführt, wenn sowohl das entsprechende Zeilenauswahlbit als auch das entsprechende Spaltenauswahlbit gleich "1" ist.

2. Wellenfront-Feldrechner, bestehend aus n x m von in n Zeilen und m Spalten angeordneten Prozessoren (10), wobei jedem Prozessor (10) ein Befehlsschieberegister (22) zugeordnet ist, wobei die Befehlsschieberegister (22) jeweils mit dem Befehlsschieberegister (22) mindestens eines benachbarten Prozessors (10) derart verbunden sind, daß die Befehlscodes so durch das Prozessorfeld geführt werden, daß jeweils die auf einer Diagonale im Prozessorfeld liegenden Prozessoren gleichzeitig denselben Befehl bearbeiten, dadurch gekennzeichnet, daß n Zeilenselektionsbits horizontal und m Spaltenselektionsbits vertikal durch diesen Wellenfrontrechner geschoben werden und daß jeder Prozessor (10) den in seinem Befehlsregister befindlichen Befehl nur dann ausführt, wenn sowohl das entsprechende Zeilenauswahlbit als auch das entsprechende Spaltenauswahlbit gleich "1" ist.

## Claims

1. Process for the operation of a highly integrated wave front array computer comprising n x m processors arranged in n rows and m columns, in which the instruction codes are shifted through the processor array in such a way that the processors located on a diagonal in the processor array simultaneously process the same instructions, characterized in that n row selection bits are shifted horizontally and m column selection bits vertically through said wave front array computer and that each processor (10) only performs the instruction in its instruction register if both the corresponding row selection bit and the corresponding column selection bit is equal to 1.

2. Wave front array computer comprising n x m processors (10) arranged in n rows and m columns and in which with each processor (10) is associated an instruction shift register (22), the instruction shift registers (22) are so connected with the instruction shift register (22) of at least one adjacent processor (10) that the instruction codes are guided through the processor array so that in each case the processors located on a diagonal in the processor array simultaneously process the same instruction, characterized in that n row selection bits are shifted horizontally and m column selection bits vertically through said wave front array computer and that each processor (10) only performs the instruction in its instruction register if both the corresponding row selection bit and the corresponding column selection bit is equal to 1.

## Revendications

1. Procédé de fonctionnement d'un réseau à haute intégration de calculateurs à front d'onde, comportant n x m processeurs disposés en n lignes et m colonnes, selon lequel les codes d'ordre sont transférés à travers le réseau de processeurs, les processeurs situés sur une même diagonale du réseau de processeurs exécutent simultanément le même ordre, caractérisé par le fait que l'on transfère, à travers ces calculateurs à front d'onde, n bits de sélection de ligne horizontale et m bits de sélection de colonne verticale et que chaque processeur (10) n'exécute qu'alors l'ordre se trouvant dans son registre d'ordre, pour autant que le bit correspondant de sélection de ligne et celui de sélection de colonne valent "1".

2.   Réseau de calculateurs à front d'onde, formé de n x m processeurs (10) disposés en n lignes et m colonnes, dans lequel chaque processeur (10) dispose d'un registre à transfert d'ordre (22) qui est relié au registre à transfert d'ordre (22) d'au moins un processeur voisin (22) de façon telle que les codes d'ordre sont transférés à travers le réseau de processeurs, les processeurs situés sur une même diagonale du réseau de processeurs exécutant simultanément le même ordre, caractérisé par le fait que n bits de sélection de ligne horizontale et m bits de sélection de colonnes verticale sont transférés à travers ces calculateurs à front d'onde et que chaque processeur (10) n'exécute qu'alors l'ordre se trouvant dans son registre d'ordre, pour autant que le bit correspondand de sélection de ligne et celui de sélection de colonne valent "1".

Fig. 1

Fig. 2

Fig. 3

# Fig. 4

# Fig. 5

# Fig. 6

# Fig. 7

# Fig. 8

# Fig. 9

# Fig. 10

# Fig. 11

$b_1$ $b_2$ $b_3$ $b_4$ $a_1$ $a_2$ $a_3$ $a_4$

unshuffle

$b_1$ $a_1$ $b_2$ $a_2$ $b_3$ $a_3$ $b_4$ $a_4$

vertauschen

$a_1$ $b_1$ $a_2$ $b_2$ $a_3$ $b_3$ $a_4$ $b_4$

shuffle

$a_1$ $a_2$ $a_3$ $a_4$ $b_1$ $b_2$ $b_3$ $b_4$

# Fig. 12

Fig. 13